# FASCICULE DE BREVET EUROPEEN

(11) **EP 3 833 854 B1**
(45) Date de publication et mention de la délivrance du brevet: **14.08.2024**
(21) Numéro de dépôt: 19790656.3
(22) Date de dépôt: 17.09.2019
(51) Int. Cl.: F01D 25/14, F01D 11/18

(54) **CARTER INTERNE DE TURBOMACHINE À ISOLATION THERMIQUE AMÉLIORÉE**
INNENGEHÄUSE EINER TURBOMASCHINE MIT VERBESSERTER WÄRMEISOLIERUNG
INTERNAL TURBOMACHINE CASING HAVING IMPROVED THERMAL INSULATION

(30) Priorité: 24.09.2018 FR 1858681
(43) Date de publication de la demande: 16.06.2021
(73) Titulaire: SAFRAN AIRCRAFT ENGINES, 75015 Paris (FR)
(72) Inventeur: SCHOLTES, Christophe, 77550 MOISSY-CRAMAYEL (FR)
(74) Mandataire: Brevalex
(86) Numéro de dépôt international: PCT/FR2019/052161
(87) Numéro de publication internationale: WO 2020/065178

(56) Documents cités:
- EP-A2- 1 698 761
- FR-A1- 2 589 520
- FR-A1- 2 957 115
- US-A1- 2016 326 900

## Description

### DOMAINE TECHNIQUE

La présente invention se rapporte à l'isolation thermique d'un carter interne de turbomachine (et notamment les carters internes de turboréacteurs d'aéronefs).

### ÉTAT DE LA TECHNIQUE ANTÉRIEURE

Les compresseurs et les turbines de turbomachines comportent classiquement au moins un ensemble rotatif ou rotor comprenant généralement une pluralité de disques. Chaque disque rotor est muni d'une pluralité d'aubes mobiles et est rotatif par rapport à une virole fixe qui entoure circonférentiellement chacun des disques. L'ensemble des viroles en vis-à-vis des aubes constitue le carter interne de la turbomachine.

Des aubes fixes (également appelés « redresseurs », pour les compresseurs, et « distributeurs », pour les turbines) peuvent être intercalées entre deux disques rotor et constituer un stator, qui est solidaire du carter interne.

Il est nécessaire de conserver un jeu entre le sommet d'une aube d'un disque rotor et la virole du carter interne située en vis-à-vis. Idéalement, de tels jeux devraient être réduits autant que possible pour améliorer les performances de la turbomachine. Cependant, il faut prendre en compte le fait que ces jeux varient au cours du fonctionnement de la turbomachine.

Ces variations de jeux sont principalement la conséquence de phénomènes mécaniques (dus notamment aux déformations du rotor sous les efforts centrifuges, aux effets des pressions de la veine d'écoulement des gaz sur le rotor et le stator, aux déplacements axiaux, etc.) et de phénomènes thermiques (dans un compresseur, et en particulier dans un compresseur haute pression, les pièces constitutives du rotor et du stator ont généralement des coefficients de dilatation thermique différents et surtout une vitesse de déformation différente en raison d'un environnement différent; en général, le stator, plus ventilé et moins massique, réagit plus rapidement que le disque du rotor dont l'inertie est principalement liée à la masse du pied de disque, souvent peu ventilé, et cet écart de « temps de réponse thermique » provoque une forte variation des jeux en fonctionnement).

La réduction des jeux en fonctionnement est un axe majeur d'amélioration des performances de la turbomachine.

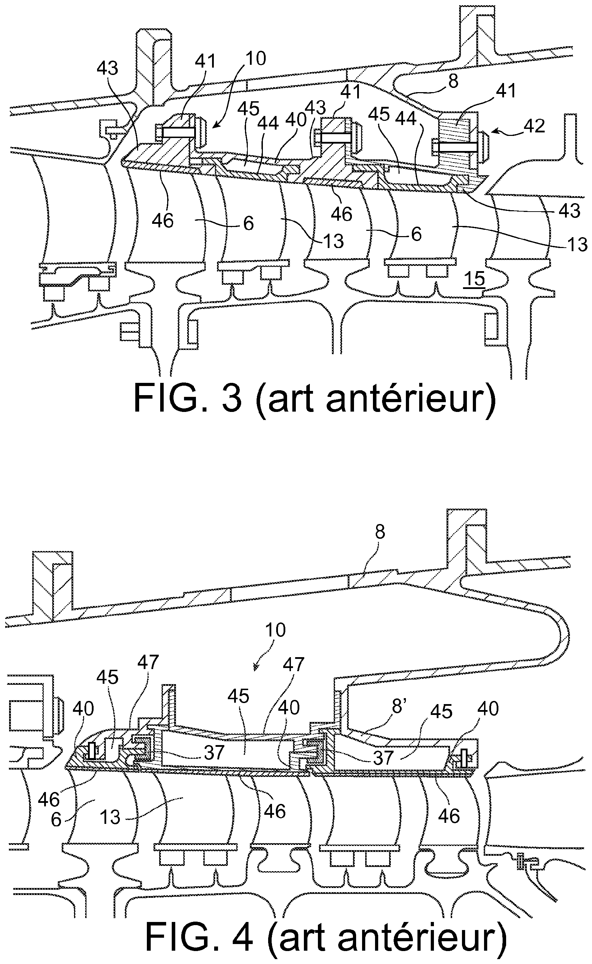

Les solutions proposées dans l'art antérieur font souvent appel à des technologies permettant de réduire le « temps de réponse thermique » du carter interne. Le plus souvent, la solution proposée consiste à équiper la paroi interne du carter interne de pièces annulaires disposées au droit des stators, de manière à former un ou plusieurs entrefers, qui vont assurer l'isolation thermique du carter interne. On rappelle qu'un entrefer est un espace annulaire fermé et étroit, dans lequel se trouve de l'air. Cette solution est par exemple détaillée dans le document **[1]** et est illustrée dans les figures 3 et 4, qui seront décrites en détail plus tard.

La solution de l'entrefer comme moyen d'isolation thermique nécessite cependant l'utilisation de nombreuses pièces (les pièces annulaires et des pièces de fixation de ces dernières), ce qui a un impact sur la masse et le coût. Il y a également des contraintes de montage et une problématique d'encombrement. Un autre exemple est présenté dans le document US 2016/326900.

Il est par ailleurs nécessaire d'assurer une bonne isolation thermique des entrefers en utilisant des moyens d'étanchéité tels que des joncs, des languettes d'étanchéité, etc., car une dégradation de l'étanchéité signifierait *in fine* une dégradation des jeux.

En outre, la solution de l'entrefer permet d'isoler la paroi interne du carter interne localement au droit des stators, mais n'isolent pas l'intégralité de la peau du carter interne. En particulier, selon la configuration choisie, il est possible que la paroi interne située en vis-à-vis des rotors ne soit pas isolée ; les parois latérales du carter interne, correspondant aux ouvertures pour le prélèvement de veine, ne sont pas isolées ; la paroi externe du carter interne n'est pas isolée.

Enfin, il est parfois impossible, par manque de place ou par difficulté d'accès, de mettre en place un tel système d'isolation thermique par entrefer dans une turbomachine existante.

Il existe donc un besoin d'optimisation de l'isolation thermique de la peau du carter interne d'une turbomachine.

### EXPOSÉ DE L'INVENTION

Pour répondre à ce besoin, l'invention a pour objet une virole de carter interne pour turbomachine, la virole étant centrée sur un axe central longitudinal et étant caractérisée en ce qu'elle comporte :
- un corps principal, qui est centré sur l'axe central longitudinal, qui comporte deux extrémités longitudinales et qui est délimité par une surface radialement interne et une surface radialement externe par rapport à l'axe central longitudinal ;
- une enveloppe d'isolation thermique, qui comporte :
   - une portion latérale de recouvrement recouvrant entièrement les extrémités longitudinales du corps principal ;
   - selon une coupe transversale à l'axe central longitudinal, une portion extérieure de recouvrement recouvrant entièrement la surface radialement externe du corps principal ;
   - selon une coupe transversale à l'axe central longitudinal, une portion intérieure de recouvrement recouvrant entièrement la surface radialement interne du corps principal ;
   la portion latérale reliant les portions intérieure et extérieure ; et
- une enveloppe de protection, qui recouvre au moins partiellement l'enveloppe d'isolation thermique et qui comporte, selon une coupe transversale à l'axe central longitudinal :
   - une portion de protection radialement externe recouvrant au moins en partie la portion extérieure de recouvrement ; et
   - une portion de protection radialement interne recouvrant au moins en partie la portion intérieure de recouvrement ;
   et en ce que l'enveloppe d'isolation thermique présente une structure poreuse à porosité volumique supérieure ou égale à 50% et a une porosité supérieure à celle du corps principal.

De préférence, la virole est une pièce monolithique.

Selon l'invention, une enveloppe d'isolation thermique, qui a une structure poreuse, recouvre entièrement le corps principal, afin de l'isoler thermiquement, et une enveloppe de protection recouvre au moins partiellement l'enveloppe d'isolation thermique. En fait, l'enveloppe de protection recouvre l'enveloppe d'isolation thermique au moins sur les parties de l'enveloppe d'isolation thermique destinées à être en contact avec un flux de fluide de la turbomachine.

Dans le cadre de la présente invention, on exprime en termes de porosité volumique la proportion de vides (pores, c'est-à-dire les vides interstitiels connectés entre eux ou non) comprise dans une zone considérée. La porosité volumique d'une zone (par exemple de l'enveloppe d'isolation thermique) est donc le rapport entre le volume de vides de cette zone et le volume total de la zone (structure + vides, c'est-à-dire la structure pleine). Il peut s'agir d'une porosité ouverte et/ou fermée.

Il existe de nombreuses méthodes d'analyse de la porosité. Les plus utilisées sont la microtomographie, les ultrasons et l'analyse d'image.

La méthode de microtomographie est une technique non destructive d'analyse 3D fournissant une image volumique de la répartition du coefficient d'absorption linéaire des rayons X. Il est possible d'obtenir une cartographie 3D des porosités présentes dans un matériau et de calculer ensuite le pourcentage volumique des interstices.

La méthode des ultrasons est une technique non destructive qui permet, en comparant la différence d'amplitude entre un signal d'entrée et un signal de sortie, d'estimer une porosité, la présence de porosité perturbant fortement la propagation d'ondes ultrasonores.

La méthode d'analyse d'images consiste à dénombrer la porosité sur une image obtenue, par exemple, à l'aide d'un microscope optique ou d'un microscope électronique à balayage.

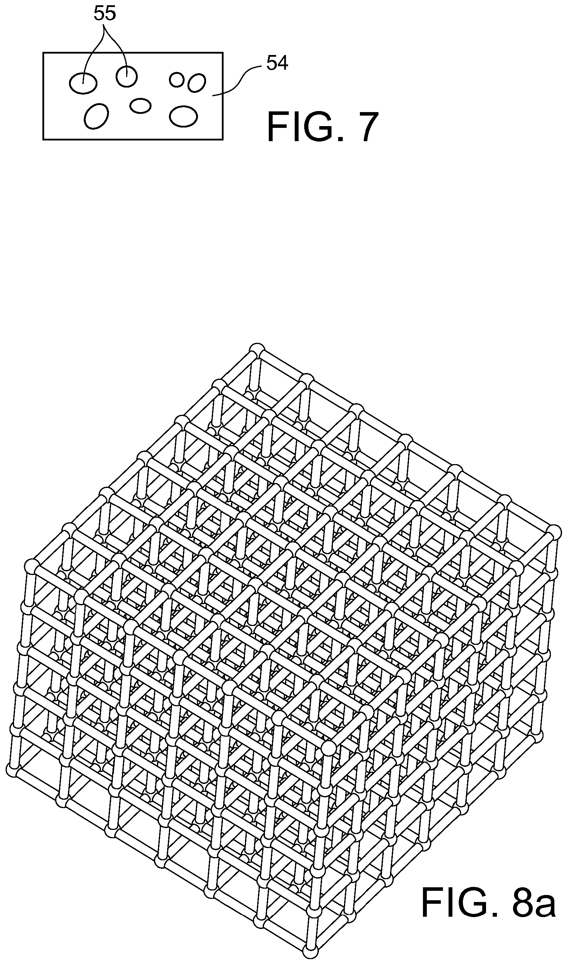

Dans le cadre de la présente invention, on parle de structure poreuse, c'est-à-dire une structure constituée d'un matériau solide et d'une ou plusieurs cavités (généralement remplies d'air) situées en interne du matériau solide. Un exemple d'une structure poreuse est représenté dans la figure 7 : on a ici un volume de matériau solide 54 au sein duquel sont dispersées des cavités 55. Les cavités ont un volume minimal qui permettra à la structure poreuse d'avoir une densité d'air la plus forte possible et au minima supérieure à 50%, de manière à assurer une bonne isolation thermique du corps principal.

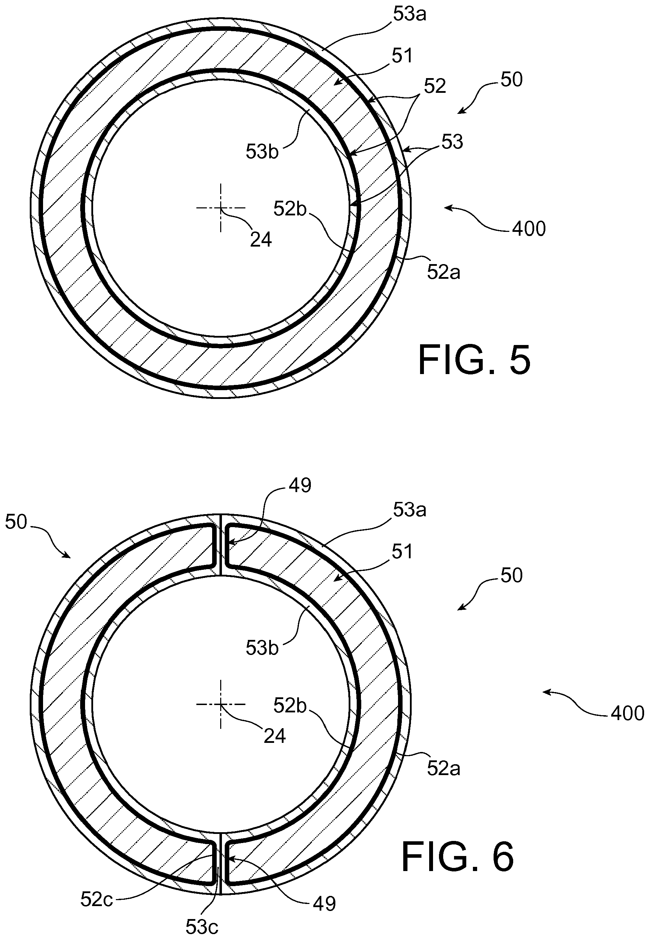

Selon une première variante, le corps principal et les portions extérieure et intérieure de recouvrement s'étendent chacun sur 360° autour de l'axe central longitudinal (24). On a ainsi une virole annulaire, comme illustré dans la figure 5.

Selon une seconde variante, le corps principal et les portions extérieure et intérieure de recouvrement s'étendent chacun autour de l'axe central longitudinal sur un secteur angulaire identique inférieur à 360°. On a ainsi une virole à segment angulaire, comme illustré dans la figure 6. Avantageusement, selon cette seconde variante, le corps principal a deux extrémités circonférentielles opposées et l'enveloppe d'isolation thermique comporte en outre une portion intermédiaire de recouvrement qui relie les portions extérieure et intérieure de recouvrement et qui recouvre entièrement chaque extrémité circonférentielle opposée du corps principal. De préférence, l'enveloppe de protection comprend en outre une portion intermédiaire de protection qui relie les portions de protection radialement externe et interne et qui recouvre entièrement la portion intermédiaire de recouvrement.

Selon une variante, les portions de protection radialement externe et interne de l'enveloppe de protection recouvrent entièrement, respectivement, la portion extérieure de recouvrement et la portion intérieure de recouvrement de l'enveloppe d'isolation thermique. De préférence, l'enveloppe de protection recouvre entièrement l'enveloppe d'isolation thermique.

De préférence, l'enveloppe de protection présente une porosité volumique inférieure à 5%. L'enveloppe de protection présente donc une structure dense, qui est peu ou non poreuse. La présence de cette enveloppe de protection dans la virole permet de conserver un état de surface acceptable pour le moteur en terme de rugosité, ce qui évite les trop grandes pertes de charge dans les circuits d'air veine et hors-veine.

Avantageusement, l'enveloppe d'isolation thermique présente une structure alvéolaire, de préférence une structure alvéolaire en nid d'abeille, ou une structure en treillis.

Une structure alvéolaire comporte une pluralité de cavités (les alvéoles) délimitées par des parois. Les alvéoles peuvent avoir toutes sortes de formes, par exemple hexagonale, cubique, etc.

Une structure en treillis est une structure tridimensionnelle comportant une unique cavité dont les parois sont reliées par une ossature (des piliers par exemple) ayant la forme d'un treillis.

La porosité de la structure alvéolaire et de la structure en treillis est principalement due aux alvéoles, dans un cas, et à l'unique cavité, dans l'autre cas. Les parois des structures alvéolaire et en treillis peuvent également être poreuse (par exemple réalisées par frittage de poudres) ; de préférence, ces parois sont denses et ont une porosité volumique inférieure à 5%, de manière à assurer une tenue mécanique adéquate de la structure poreuse.

Selon un mode de réalisation, le corps principal, l'enveloppe d'isolation thermique et l'enveloppe de protection sont réalisés d'un seul tenant par fabrication additive pour former une pièce monobloc et monolithique.

Selon un mode de réalisation, la virole comprend une bande de matière abradable qui est intégrée dans la virole en étant réalisée directement dans l'enveloppe de protection.

L'invention a aussi pour objet un carter interne de turbomachine, comprenant au moins deux viroles telles que décrites ci-dessus, disposées adjacentes axialement l'une à l'autre. De préférence, au moins l'une desdites viroles du carter interne est destinée à supporter des aubes fixes.

Enfin, l'invention a pour objet une turbomachine équipée d'un tel carter interne.

Selon un mode de réalisation, la turbomachine comprenant des aubes mobiles, au moins une virole comprend une bande de matière abradable qui est rapportée sur ladite au moins une virole au droit des aubes mobiles.

La présente invention présente de nombreux avantages.

La solution proposée par l'invention permet d'isoler complètement la peau du carter interne sur toutes ses faces et est simple à mettre en oeuvre, que ce soit, d'une part, au niveau du montage de viroles à segment angulaire pour former une virole annulaire, ou au niveau du montage d'une pluralité de viroles adjacentes longitudinalement pour former le carter interne et, d'autre part, au niveau de la fabrication de la virole.

En particulier, l'isolation thermique du carter interne est optimisée par rapport à l'art antérieur, sa peau (à savoir sa paroi interne, sa paroi externe et ses parois latérales (correspondant aux zones de prélèvement de flux d'air)) étant isolée thermiquement. En particulier, alors que la solution avec entrefers de l'art antérieur ne permettait pas, dans la configuration où les entrefers étaient disposés uniquement au droit des stators (et absents au droit des rotors), d'isoler les zones entre deux entrefers (zones dans lesquelles le flux de chaleur passe par conduction), la solution proposée dans le cadre de l'invention rend possible cette isolation.

En outre, alors que dans le cas d'un système d'isolation par entrefer selon l'art antérieur, les fuites au niveau de la jonction entre les éléments formant l'entrefer (par exemple la jonction des stators avec la paroi interne du carter) génèrent un débit d'air qui a un effet très néfaste sur les variations de jeux, l'effet de telles fuites avec le carter interne selon l'invention n'est plus gênant sur les jeux. En effet, l'effet néfaste de ces fuites étant l'augmentation du temps de réponse du carter interne, cet effet n'existe plus grâce à l'enveloppe d'isolation thermique qui est poreuse et qui a pour effet que le coeur du carter interne (i.e. le corps principal) est entièrement isolé thermiquement de l'extérieur; en d'autres termes, la peau du carter interne est entièrement isolée thermiquement.

Au final, on obtient une meilleure isolation thermique du carter interne, ce qui réduit les jeux en fonctionnement et donc la consommation spécifique de la turbomachine. On améliore donc les performances de la turbomachine et son opérabilité.

Cette isolation thermique du carter interne peut en outre présenter un encombrement moins important que celui généré par la solution avec entrefer (par exemple, dans la configuration où les redresseurs sont solidaires de la peau interne du carter (figure 4)), ce qui rend plus simple son montage dans une turbomachine.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 représente une vue schématique en coupe axiale d'une turbomachine d'aéronef ;
- la figure 2 est une vue agrandie du compresseur à haute pression de la figure 1 ;
- les figures 3 et 4 sont respectivement une vue agrandie de la partie amont (figure 3) et de la partie aval (figure 4) du stator du compresseur de la figure 2, présentant une isolation thermique du carter interne par entrefers selon l'art antérieur ;
- la figure 5 est une vue schématique en coupe transversale d'un mode de réalisation d'une virole selon l'invention ;
- la figure 6 est une vue schématique en coupe transversale d'un autre mode de réalisation d'une virole selon l'invention ;
- la figure 7 représente, selon une vue en coupe, un exemple d'une structure poreuse pour l'enveloppe d'isolation thermique ;
- les figures 8a et 8b représentent des exemples d'une structure en treillis ;
- la figure 9 représente un exemple d'une structure alvéolaire ;
- la figure 10a est une vue de la partie amont du stator du compresseur présentant une isolation thermique du carter interne selon l'invention ;
- la figure 10b est une vue éclatée de pièces de la figure 10a ;
- la figure 11a est une vue de la partie aval du stator du compresseur présentant une isolation thermique du carter interne selon l'invention ;
- la figure 11b est une vue éclatée de pièces de la figure 11a.

### EXPOSÉ DÉTAILLÉ DE MODES DE RÉALISATION PARTICULIERS

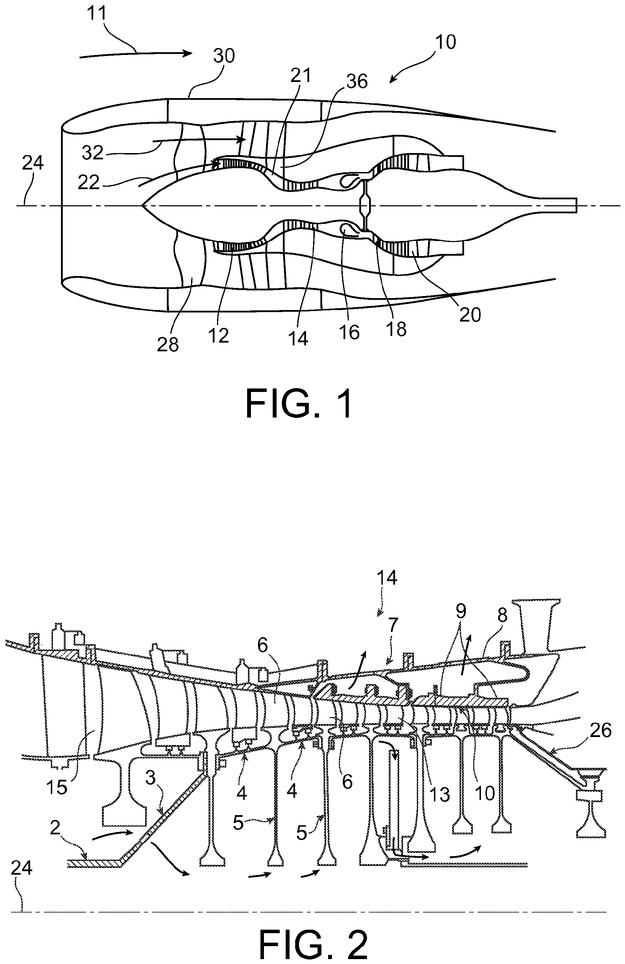

En référence tout d'abord à la figure 1, il est représenté une turbomachine 1 d'aéronef, du type turboréacteur à double flux et à double corps. Ce turboréacteur 1 comporte, de l'amont vers l'aval selon la direction principale d'écoulement des gaz schématisée par la flèche 11, un compresseur basse pression 12, un compresseur haute pression 14, une chambre de combustion 16, une turbine haute pression 18 et une turbine basse pression 20, ces éléments définissant une veine primaire 21 traversée par un flux primaire de gaz 22. La soufflante 28 est carénée par une nacelle 30 pour générer un flux secondaire 32 à travers une veine secondaire 31.

La figure 2 est une vue d'ensemble du compresseur à haute pression 14 de la figure 1. Le compresseur 14 comprend un rotor central 26 entraîné par une ligne d'arbres 2 et composé d'un ensemble 3 de forme fuselée composée d'anneaux 4 juxtaposés et séparés par des disques 5 au droit d'étages d'aubes mobiles 6. Un stator 7 entoure le rotor 26 et comprend un carter externe 8 et un carter interne 10, formé de viroles 40 annulaires juxtaposées axialement, tournées vers le rotor 1. Le carter interne 10 sert à délimiter une veine annulaire 15 d'écoulement des gaz dans laquelle s'écoule le flux primaire de gaz 22 et dans laquelle s'étendent les étages d'aubes mobiles 6 et des étages d'aubes fixes 13 de redressement de l'écoulement, qui sont accrochés aux viroles annulaires 40 et alternent avec les étages précédemment mentionnés.

Les figures 3 et 4 sont respectivement une vue agrandie de la partie amont (figure 3) et de la partie aval (figure 4) du stator du compresseur représenté dans la figure 2, ces vues montrant une solution d'isolation de la paroi interne du carter interne 10 par des entrefers selon l'art antérieur.

Dans la figure 3, le carter interne 10 est composé de viroles annulaires 40, unies entre elles par des boulons 42 enserrant des brides 41 qui les terminent. Ces viroles annulaires 40 comportent des excroissances 43 radialement à l'intérieur, qui débouchent sur la veine 15 d'écoulement d'air et sont donc exposées à sa température.

Des anneaux 44 de support des aubes fixes 13 permettent d'accrocher les aubes fixes 13 aux viroles annulaires 40 et de créer un entrefer 45. Une couche de matériau abradable 46 est disposée sur les viroles 40 au droit des rotors 6.

Dans la figure 4, le carter interne 10 est composé de viroles annulaires 40 qui sont notamment reliées par des joints séparés 37 à section en agrafe. Des éléments 8', 47 sont rattachés aux viroles annulaires 40 pour former des entrefers 45.

Comme on peut le constater, ces solutions de l'art antérieur ne permettent pas une isolation optimale du carter interne (figure 3) et/ou nécessitent de nombreuses pièces d'assemblage (figure 4).

Selon l'invention, on remplace le système classique d'isolation du carter interne obtenu par des entrefers par un système plus performant. Selon l'invention, le carter interne 100 est formé d'une pluralité de pièces annulaires 400 disposées adjacentes axialement les unes aux autres selon l'axe longitudinal 24 de la pièce (qui coïncide avec l'axe longitudinal de la turbomachine). La pièce annulaire 400 peut être une virole annulaire 50 (comme illustré dans la figure 5) ou résulter de l'assemblage circonférentiel de deux ou plus de deux viroles 50 à segment angulaire. À titre d'exemple, dans la figure 6, deux viroles à segment angulaire de 180° sont assemblées selon leur circonférence pour former une virole annulaire.

Chaque virole est une pièce, de préférence monolithique, qui présente une porosité variable par zones. Ainsi, la virole 50 comporte un corps principal 51, dont la surface est entièrement recouverte d'une couche formant une enveloppe d'isolation thermique 52, qui a une structure poreuse et dont la fonction est d'isoler thermiquement le corps principal 51. Cette enveloppe d'isolation thermique 52 forme ainsi autour du corps principal 51 une interface poreuse qui l'isole thermiquement de l'environnement extérieur.

Comme illustré dans les figures 5 et 6, qui représentent une vue en coupe transversale à l'axe central longitudinal 24 d'une virole, l'enveloppe d'isolation thermique 52 comporte une portion extérieure de recouvrement 52a, qui recouvre entièrement la surface radialement externe du corps principal 51, ainsi qu'une portion intérieure de recouvrement 52b, qui recouvre entièrement la surface radialement interne du corps principal 51. Une portion latérale de recouvrement (non visible dans cette vue en coupe) recouvre entièrement les extrémités longitudinales du corps principal 51 et relie les portions intérieure et extérieure.

La virole 50 comporte également une enveloppe de protection 53, qui recouvre au moins partiellement l'enveloppe d'isolation thermique.

Comme illustré dans les figures 5 et 6, l'enveloppe de protection 53 comporte une portion de protection radialement externe 53a, qui recouvre la portion extérieure de recouvrement 52a, ainsi qu'une portion de protection radialement interne 53b, qui recouvre la portion intérieure de recouvrement 52b. L'enveloppe de protection peut être une couche de revêtement déposée sur l'enveloppe d'isolation thermique.

Lorsque la virole est une virole à segment angulaire, comme illustré dans la figure 6, la virole comporte deux extrémités circonférentielles 49 opposées ; l'enveloppe d'isolation thermique 52 comporte en outre une portion intermédiaire 52c de recouvrement, qui recouvre entièrement les extrémités circonférentielles 49 du corps principal 51, et qui relie les portions extérieure 52a et intérieure 52b de recouvrement. Comme illustré dans la figure 6, l'enveloppe de recouvrement 53 comporte une portion intermédiaire de protection 53c, qui relie les portions de protection radialement externe 53a et interne 53b, et qui recouvre entièrement la portion intermédiaire de recouvrement 52c de l'enveloppe d'isolation thermique 52.

L'enveloppe de protection 53 est de préférence dense, avec une porosité volumique au plus de 5% (borne exclue).

De préférence, l'enveloppe d'isolation thermique 52 est située proche des interfaces avec l'air et est donc proche de la peau de la virole.

L'enveloppe d'isolation thermique 52 doit présenter un bon compromis entre porosité volumique, tenue mécanique et coefficient de dilatation. Les inventeurs ont constaté que les structures en treillis (ou « lattice structure » en anglais) et les structures alvéolaires en nid d'abeilles pouvaient assurer toutes ces fonctions.

L'enveloppe d'isolation thermique 52 peut ainsi avoir une structure en treillis, c'est-à-dire une structure rigide qui consiste en une armature ou ossature ouverte, constituée d'organes de liaison, par exemple de type barres, poutres ou similaires, qui peuvent avoir une forme droite ou courbe et qui sont en contact, se croisent ou se chevauchent selon un motif répétitif en trois dimensions. Le motif répétitif peut par exemple être un cube, un hexagone, une pyramide, une sphère, etc. et le treillis sera alors constitué de cubes interconnectés, d'hexagones interconnectés, de pyramides interconnectées, de sphères interconnectées, etc.

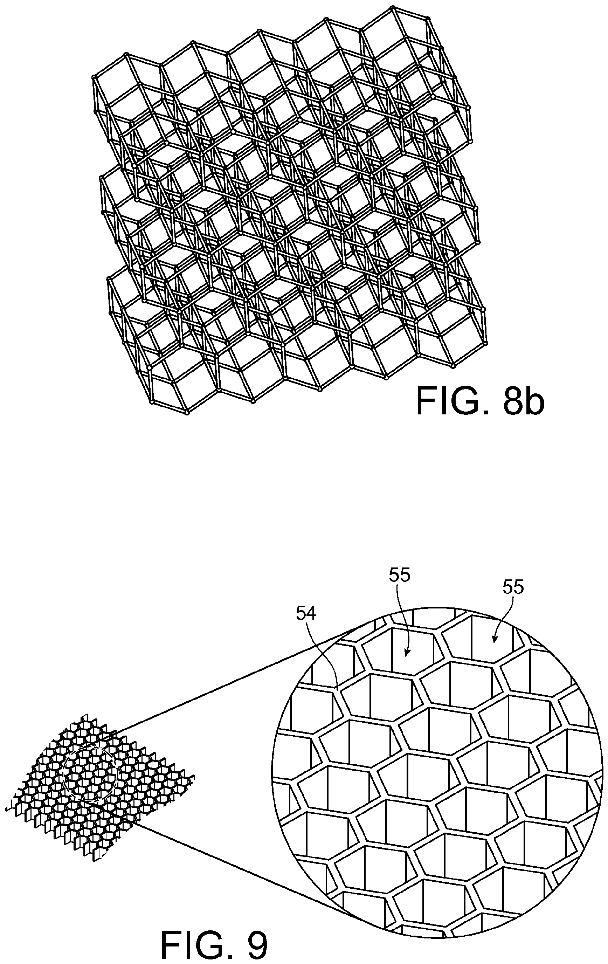

Dans les figures 8a et 8b sont représentés des exemples possibles de structures en treillis : à motif cubique (figure 8a) et à motif hexagonal (figure 8b).

L'enveloppe d'isolation thermique 52 peut également avoir une structure alvéolaire, dont le motif répétitif peut avoir une forme polygonale, par exemple triangulaire, carré, rectangulaire, hexagonale etc. Dans la figure 9 est représenté un exemple d'une structure en nid d'abeilles à alvéoles de forme hexagonale. Les alvéoles forment les cavités vides 55 et les parois 54 de ces alvéoles forment le matériau solide de la structure poreuse.

En thermique, le rôle du corps principal 51 est de fournir une inertie thermique à la peau du carter interne, lui permettant de réagir plus lentement lors d'un changement de conditions thermiques dans la veine. En mécanique, son rôle est de garantir une rigidité de l'ensemble de la peau du carter interne sous des efforts de pression (veine notamment) et des efforts liés à la thermique pour garantir des déplacements faibles.

En thermique, l'enveloppe d'isolation thermique 52 a pour fonction d'isoler thermiquement le corps principal 51 de la surface extérieure du carter interne. Elle a donc une porosité supérieure à celle du corps principal. De préférence, le corps principal a une structure dense, c'est-à-dire peu ou non poreuse, de préférence avec une porosité volumique inférieure à 5%.

En mécanique, le rôle de l'enveloppe d'isolation thermique 52 est de solidariser les différents éléments de la virole, à savoir l'interne (le corps principal 51) et l'externe (c'est-à-dire la peau, qui peut être formée par l'enveloppe protection 53). Elle doit donc respecter certaines contraintes de rigidité (une déformation trop grande serait néfaste pour les jeux). Le choix du type et de l'étendue de la porosité de l'enveloppe d'isolation thermique 52 est donc un compromis entre performance thermique et mécanique.

L'enveloppe d'isolation thermique 52 est au moins partiellement séparée physiquement de la surface extérieure (c'est-à-dire de la peau) du carter interne par l'enveloppe de protection 53, au moins sur les parties de l'enveloppe d'isolation thermique destinées à être en contact avec un flux de fluide de la turbomachine. Cette enveloppe de protection 53 sert ainsi de barrière physique entre l'enveloppe d'isolation thermique 52 et la surface extérieure de la virole ; de préférence, cette enveloppe de protection 53 est peu ou non poreuse (de préférence une porosité volumique inférieure à 5%). En effet, une surface poreuse serait rugueuse, ce qui est néfaste pour l'aérodynamisme (et le rendement), en particulier en ce qui concerne l'interface avec la veine, mais aussi pour les pertes de charges dans les cavités carter dont l'air est souvent utilisé, dans le cas du compresseur, pour des prélèvements vers le reste du moteur et de l'avion (refroidissement des turbines, pressurisation de la cabine de l'avion, etc.).

Une partie de l'enveloppe de protection 53 peut être destinée à être en regard d'une plateforme supérieure d'aube, éventuellement par l'intermédiaire d'un abradable.

Le corps principal 51, l'enveloppe d'isolation thermique 52 (qui recouvre entièrement la surface du corps principal) et l'enveloppe de protection 53 (qui recouvre partiellement ou totalement l'enveloppe d'isolation thermique) peuvent être réalisés d'un seul tenant afin d'obtenir une pièce monobloc et monolithique, ce qui a l'avantage d'éviter des étapes d'assemblage. Cela est possible en utilisant la technique de la fabrication additive. Cela permet de remplacer une solution complexe d'isolation de la peau du carter interne par entrefers par une solution simple, plus efficace et à montage simplifié, présentant un nombre de pièces nécessaires réduit et éventuellement un encombrement réduit.

Les techniques de fabrication additives permettent de fabriquer des pièces tridimensionnelles, à géométries complexes, dans des matériaux résistants, tout en mettant en place une zone de porosité optimisée pour la recherche d'un optimum en comportement mécanique. La technique de fabrication est bien connue et ne sera pas décrite en détail. Elle regroupe notamment les méthodes de stéréolithographie, de frittage laser sélectif, de dépôt de fil en fusion, de fusion laser, etc.

Le frittage sélectif au laser utilise un laser haute puissance pour fritter de petites particules de plastique, de métal ou de céramique jusqu'à obtenir la pièce tridimensionnelle à former. Dans le cadre de l'invention, on utilisera des matériaux métalliques (métal ou alliage) ou céramiques.

Le dépôt de fil en fusion fait appel à une transition temporaire d'un matériau solide à un état liquide, généralement par chauffage ; le matériau est généralement appliqué à un endroit voulu à l'aide d'une buse d'extrusion.

Les différentes zones de la virole 50 selon l'invention peuvent être réalisées en tout matériau compatible avec la fabrication additive, qui soit capable de fournir une rigidité suffisante à la zone concernée et compatible avec l'usage attendu de la virole (notamment en termes de résistances mécanique et à la chaleur). Ces différentes zones de la virole (corps principal, enveloppe d'isolation thermique et enveloppe de protection) peuvent ainsi être en matériaux métalliques et/ou céramiques. On peut par exemple utiliser de l'acier inoxydable, des alliages de nickel, des alliages de titane, etc. Ces zones peuvent être réalisées en des matériaux différents ou identiques.

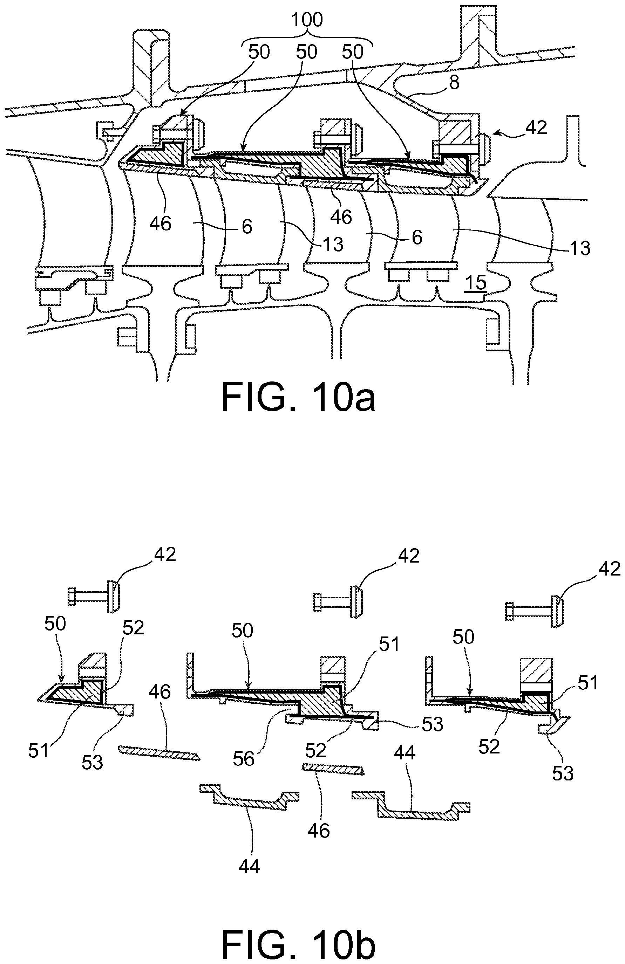

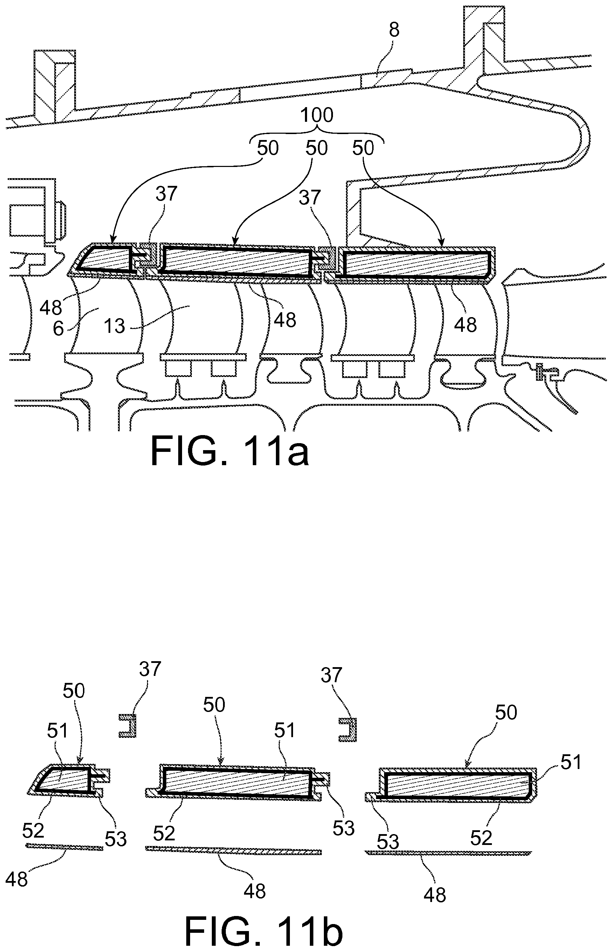

Deux exemples de carter interne dont la peau est isolée selon l'invention sont illustrés dans les figures 10a et 11a. Comme on peut le voir dans les figures 10b et 11b, qui sont des vues éclatées des figures 10a et 11a, des pièces annulaires (qui sont des viroles 50 annulaires ou à segment angulaire) sont reliées les unes aux autres par des joints 37 ou bien sont munies de brides et reliées les unes aux autres par des boulons 42. Les viroles peuvent être formées d'une unique pièce (virole annulaire, comme illustrée dans la figure 6) ou de l'assemblage de plusieurs viroles à segment angulaire reliées circonférentiellement (figure 7).

Dans les figures 10a et 10b, une bande circulaire de matière abradable 46 est rapportée sur les viroles 50 au droit des aubes mobiles 6. Cette bande 46 peut être rapportée sur, ou bien être intégrée dans, la virole en étant réalisée directement dans l'enveloppe de protection 53.

Dans les figures 11a et 11b, une languette d'étanchéité 48 est rapportée sur l'enveloppe de protection 53 sur toute la surface interne des viroles 50) afin d'assurer l'étanchéité.

Selon une variante illustrée par la référence 56 dans les figures 10a et 10b, l'enveloppe de protection 53 peut recouvrir partiellement l'enveloppe d'isolation thermique 52. Cela est possible lorsque la surface non recouverte de l'enveloppe d'isolation thermique 52 est destinée à être recouverte par une autre pièce (ici par le crochet 44 servant d'attache des aubes fixes 13), ce qui permet à l'enveloppe d'isolation thermique 52 d'exercer tout de même sa fonction d'isolation thermique du corps principal 51.

### REFERENCE CITEE

**[1]** EP 1 059 420

## Revendications

1. Virole (50) de carter interne (100) pour turbomachine, la virole étant centrée sur un axe central longitudinal (24) et étant **caractérisée en ce qu'**elle comporte :
- un corps principal (51), qui est centré sur l'axe central longitudinal, qui comporte deux extrémités longitudinales et qui est délimité par une surface radialement interne et une surface radialement externe par rapport à l'axe central longitudinal ;
- une enveloppe d'isolation thermique (52), qui comporte :
• une portion latérale de recouvrement recouvrant entièrement les extrémités longitudinales du corps principal ;
• selon une coupe transversale à l'axe central longitudinal (24), une portion extérieure de recouvrement (52a) recouvrant entièrement la surface radialement externe du corps principal ;
• selon une coupe transversale à l'axe central longitudinal (24), une portion intérieure de recouvrement (52b) recouvrant entièrement la surface radialement interne du corps principal ;
la portion latérale reliant les portions intérieure et extérieure ; et
- une enveloppe de protection (53), qui recouvre au moins partiellement l'enveloppe d'isolation thermique (52) et qui comporte, selon une coupe transversale à l'axe central longitudinal (24) :
• une portion de protection radialement externe (53a) recouvrant au moins en partie la portion extérieure de recouvrement (52a) ; et
• une portion de protection radialement interne (53b) recouvrant au moins en partie la portion intérieure de recouvrement (52b) ;
et **en ce que** l'enveloppe d'isolation thermique présente une structure poreuse à porosité volumique supérieure ou égale à 50% et a une porosité supérieure à celle du corps principal.

2. Virole selon la revendication 1, dans laquelle le corps principal (51) et les portions extérieure (52a) et intérieure (52b) de recouvrement s'étendent chacun sur 360° autour de l'axe central longitudinal (24).

3. Virole selon la revendication 1, dans laquelle le corps principal (51) et les portions extérieure (52a) et intérieure (52b) de recouvrement s'étendent chacun autour de l'axe central longitudinal (24) sur un secteur angulaire identique inférieur à 360°.

4. Virole selon la revendication 3, dans laquelle le corps principal (51) a deux extrémités circonférentielles (49) opposées et l'enveloppe d'isolation thermique (52) comporte en outre une portion intermédiaire (52c) de recouvrement qui relie les portions extérieure (52a) et intérieure (52b) de recouvrement et qui recouvre entièrement chaque extrémité circonférentielle opposée du corps principal.

5. Virole selon la revendication 4, l'enveloppe de protection (53) comprend en outre une portion intermédiaire de protection (53c) qui relie les portions de protection radialement externe (53a) et interne (53b) et qui recouvre entièrement la portion intermédiaire de recouvrement (52c).

6. Virole selon l'une quelconque des revendications 1 à 5, dans laquelle les portions de protection radialement externe (53a) et interne (53b) de l'enveloppe de protection recouvrent entièrement, respectivement, la portion extérieure de recouvrement (52a) et la portion intérieure de recouvrement (52b) de l'enveloppe d'isolation thermique.

7. Virole selon l'une quelconque des revendications 1 à 6, dans lequel l'enveloppe de protection présente une porosité volumique inférieure à 5%.

8. Virole selon l'une quelconque des revendications 1 à 7, dans laquelle l'enveloppe d'isolation thermique (52) présente une structure alvéolaire, de préférence une structure alvéolaire en nid d'abeille, ou une structure en treillis.

9. Virole selon l'une quelconque des revendications 1 à 8, dans laquelle le corps principal (51), l'enveloppe d'isolation thermique (52) et l'enveloppe de protection (53) sont réalisés d'un seul tenant parfabrication additive pourformer une pièce monobloc et monolithique.

10. Virole selon l'une quelconque des revendications 1 à 9, comprenant une bande de matière abradable (46) qui est intégrée dans la virole en étant réalisée directement dans l'enveloppe de protection (53).

11. Carter interne (100) de turbomachine, comprenant au moins deux viroles selon l'une quelconque des revendications 1 à 10, disposées adjacentes axialement l'une à l'autre.

12. Turbomachine équipée d'un carter interne selon la revendication 11.

13. Turbomachine selon la revendication 12, comprenant des aubes mobiles (6) et dans laquelle au moins une virole comprend une bande de matière abradable (46) qui est rapportée sur ladite au moins une virole au droit des aubes mobiles (6).

## Patentansprüche

1. Mantelring (50) eines Innengehäuses (100) für eine Turbomaschine, wobei der Mantelring auf einer Längsmittelachse (24) zentriert und **dadurch gekennzeichnet ist, dass** sie Folgendes umfasst:
- einen Hauptkörper (51), der auf der Längsmittelachse zentriert ist, der zwei Längsenden umfasst und der durch eine radial innere Oberfläche und eine radial äußere Oberfläche im Verhältnis zur Längsmittelachse begrenzt ist;
- eine wärmeisolierende Ummantelung (52), die Folgendes umfasst:
• einen seitlichen Abdeckungsabschnitt, der die Längsenden des Hauptkörpers vollständig abdeckt;
• einen äußeren Abdeckungsabschnitt (52a), der die radial äußere Oberfläche des Hauptkörpers vollständig abdeckt, entlang eines Schnitts quer zur Längsmittelachse (24);
• einen inneren Abdeckungsabschnitt (52b), der die radial innere Oberfläche des Hauptkörpers vollständig abdeckt, entlang eines Schnitts quer zur Längsmittelachse (24);
wobei der seitliche Abschnitt den inneren und den äußeren Abschnitt verbindet; und
- eine Schutzummantelung (53), die die wärmeisolierende Ummantelung (52) mindestens teilweise abdeckt und entlang eines Schnitts quer zur Längsmittelachse (24) Folgendes umfasst:
• einen radial äußeren Schutzabschnitt (53a), der den äußeren Abdeckungsabschnitt (52a) mindestens teilweise abdeckt; und
• einen radial inneren Schutzabschnitt (53b), der den inneren Abdeckungsabschnitt (52b) mindestens teilweise abdeckt;
und dadurch, dass die wärmeisolierende Ummantelung eine poröse Struktur mit einer Volumenporosität von größer gleich 50 % aufweist und eine Porosität hat, die größer ist als die des Hauptkörpers.

2. Mantelring nach Anspruch 1, wobei sich der Hauptkörper (51) und der äußere (52a) und der innere (52b) Abdeckungsabschnitt jeweils über 360° um die Längsmittelachse (24) erstrecken.

3. Mantelring nach Anspruch 1, wobei sich der Hauptkörper (51) und der äußere (52a) und der innere (52b) Abdeckungsabschnitt jeweils über einen identischen Winkelsektor von weniger als 360° um die Längsmittelachse (24) erstrecken.

4. Mantelring nach Anspruch 3, wobei der Hauptkörper (51) zwei gegenüberliegende Umfangsenden (49) aufweist und die wärmeisolierende Ummantelung (52) ferner einen Zwischenabdeckungsabschnitt (52c) umfasst, der den äußeren (52a) und den inneren (52b) Abdeckungsabschnitt verbindet und der jedes gegenüberliegende Umfangsende des Hauptkörpers vollständig abdeckt.

5. Mantelring nach Anspruch 4, wobei die Schutzummantelung (53) ferner einen Zwischenschutzabschnitt (53c) umfasst, der den radial äußeren (53a) und den radial inneren (53b) Schutzabschnitt verbindet und der den Zwischenabdeckungsabschnitt (52c) vollständig abdeckt.

6. Mantelring nach einem der Ansprüche 1 bis 5, wobei der radial äußere (53a) und der radial innere (53b) Schutzabschnitt der Schutzummantelung den äußeren Abdeckungsabschnitt (52a) bzw. den inneren Abdeckungsabschnitt (52b) der wärmeisolierenden Ummantelung vollständig abdecken.

7. Mantelring nach einem der Ansprüche 1 bis 6, wobei die Schutzummantelung eine Volumenporosität von weniger als 5 % aufweist.

8. Mantelring nach einem der Ansprüche 1 bis 7, wobei die wärmeisolierende Ummantelung (52) eine Zellstruktur, vorzugsweise eine Wabenzellstruktur, oder eine Gitterstruktur aufweist.

9. Mantelring nach einem der Ansprüche 1 bis 8, wobei der Hauptkörper (51), die wärmeisolierende Ummantelung (52) und die Schutzummantelung (53) durch additive Fertigung einstückig hergestellt sind, um ein einteiliges und monolithisches Bauteil zu bilden.

10. Mantelring nach einem der Ansprüche 1 bis 9, der einen Streifen aus abreibbarem Material (46) umfasst, der in dem Mantelring integriert ist, indem er direkt in der Schutzummantelung (53) hergestellt wird.

11. Innengehäuse (100) für eine Turbomaschine, das mindestens zwei Mantelringe nach einem der Ansprüche 1 bis 10 umfasst, die axial nebeneinander angeordnet sind.

12. Turbomaschine, die mit einem Innengehäuse nach Anspruch 11 ausgestattet ist.

13. Turbomaschine nach Anspruch 12, die Laufschaufeln (6) umfasst und wobei mindestens ein Mantelring einen Streifen aus abreibbarem Material (46) umfasst, der auf dem mindestens einen Mantelring im Bereich der Laufschaufeln (6) angebracht ist.

## Claims

1. Internal casing (100) hoop (50) for a turbomachine, the hoop being centred on a longitudinal central axis (24) and being **characterised in that** it includes:
- a main body (51), that is centred on the longitudinal central axis, that includes two longitudinal ends and that is delimited by a radially internal surface and a radially external surface relative to the longitudinal central axis;
- a thermal insulation envelope (52), that includes:
• a lateral covering portion entirely covering the longitudinal ends of the main body;
• along a section transversal to the longitudinal central axis (24), an exterior covering portion (52a) entirely covering the radially external surface of the main body;
• along a section transversal to the longitudinal central axis (24), an interior covering portion (52b) entirely covering the radially internal surface of the main body;
the lateral portion connecting the interior and exterior portions; and
- a protective envelope (53), that at least partially covers the thermal insulation envelope (52) and that includes, along a section transversal to the longitudinal central axis (24):
• a radially external protective portion (53a) at least partially covering the exterior covering portion (52a); and
• a radially internal protective portion (53b) at least partially covering the interior covering portion (52b);
and **in that** the thermal insulation envelope has a porous structure with a volumetric porosity greater than or equal to 50% and has a porosity higher than the one of the main body.

2. Hoop according to claim 1, wherein the main body (51) and the exterior (52a) and interior (52b) covering portions each extend over 360° around the longitudinal central axis (24).

3. Hoop according to claim 1, wherein the main body (51) and the exterior (52a) and interior (52b) covering portions each extend around the longitudinal central axis (24) over an identical angular sector less than 360°.

4. Hoop according to claim 3, wherein the main body (51) has two opposite circumferential ends (49) and the thermal insulation envelope (52) further includes an intermediate covering portion (52c) that connects the exterior (52a) and interior (52b) covering portions and that entirely covers each opposite circumferential end of the main body.

5. Hoop according to claim 4, the protective envelope (53) further comprises an intermediate protective portion (53c) that connects the radially external (53a) and internal (53b) protective portions and that entirely covers the intermediate covering portion (52c).

6. Hoop according to any of claims 1 to 5, wherein the radially external (53a) and internal (53b) protective portions of the protective envelope entirely cover, respectively, the exterior covering portion (52a) and the interior covering portion (52b) of the thermal insulation envelope.

7. Hoop according to any of claims 1 to 6, wherein the protective envelope has a volumetric porosity of less than 5%.

8. Hoop according to any of claims 1 to 7, wherein the thermal insulation envelope (52) has a cellular structure, preferably a honeycomb cellular structure, or a lattice structure.

9. Hoop according to any of claims 1 to 8, wherein the main body (51), the thermal insulation envelope (52) and the protective envelope (53) are made from a single piece by additive manufacturing to form a single-block and monolithic part.

10. Hoop according to any of claims 1 to 9, comprising a strip of abradable material (46) that is integrated into the hoop by being made directly in the protective envelope (53).

11. Internal turbomachine casing (100), comprising at least two hoops according to any of claims 1 to 10, arranged axially adjacent to one another.

12. Turbomachine equipped with an internal casing according to claim 11.

13. Turbomachine according to claim 12, comprising movable blades (6) and wherein at least one loop comprises a strip of abradable material (46) that is added onto said at least one loop in line with the movable blades (6).
